# EUROPEAN PATENT SPECIFICATION

(11) **EP 2 471 696 B1**
(45) Date of publication and mention of the grant of the patent: **20.05.2015**
(21) Application number: 11193255.4
(22) Date of filing: 13.12.2011
(51) Int. Cl.: B62D 15/02

(54) **System and method for assisting a vehicle operator to parallel park a vehicle**
System und Verfahren zur Unterstützung eines Fahrzeugbedieners zum parallelen Einparken eines Fahrzeugs
Système et procédé d'assistance d'opérateur de véhicule pour le stationnement parallèle d'un véhicule

(30) Priority: 29.12.2010 US 201013980498
(43) Date of publication of application: 04.07.2012
(73) Proprietor: Delphi Technologies, Inc., Troy, MI 48007 (US)
(72) Inventor: Cluff, Charles A., Zionsville, IN 46077 (US)
(74) Representative: Neill, Andrew Peter

(56) References cited:
- DE-A1-102009 027 289
- US-A1- 2009 085 771
- US-A1- 2009 157 260
- US-A1- 2010 100 270
- US-A1- 2010 204 866
- US-A1- 2010 271 236

## Description

### TECHNICAL FIELD

The invention generally relates to a system and method for assisting a vehicle operator to parallel park a vehicle, and more particularly relates to a system and method for finding a suitable parallel parking place and providing parallel parking assistance using only a single proximity sensor.

### BACKGROUND OF INVENTION

Some vehicles are equipped with parallel parking guidance or parallel parking assistance systems to either autonomously operate the steering and braking of the vehicle to parallel park the vehicle, or to provide the vehicle operator with audible and/or visual cues to assist the vehicle operator to parallel park the vehicle. However such systems are equipped with cameras and/or multiple sensors, and correspondingly complex controllers that undesirably increase the cost of such systems. US Patent Application Pub. No. US 2010/0100270, considered as the closest prior art according to the preamble of claim 1, describes methods to assist parking, including parallel parking.

### SUMMARY OF THE INVENTION

In accordance with one embodiment of this invention, a method for assisting a vehicle operator to parallel park a vehicle, said method comprising the steps of: determining parallel parking space requirements based on a travel path defined by a vehicle length, a vehicle width, a minimum turning radius, and a minimum arc radius of a front corner of the vehicle; providing a single proximity sensor configured to output a clearance signal indicative of a clearance distance beside the vehicle; and providing a controller configured to perform the steps of storing the parallel parking space requirements; receiving the clearance signal from the single proximity sensor; detecting a parallel parking space suitable for parallel parking the vehicle based on the clearance signal; indicating when to start a first backing maneuver; indicating when to start a second backing maneuver; and indicating when to end the second backing maneuver; characterized in that the step of detecting a parallel parking space includes: moving the vehicle in a direction substantially parallel to the parallel parking space while the controller performs the steps of: detecting a rear boundary of the parallel parking space when the clearance signal indicates a clearance distance greater than a depth threshold, determining a parallel parking space depth based on a minimum clearance distance detected while the clearance distance is greater than the depth threshold, detecting a front boundary of the parallel parking space when either the clearance signal indicates a clearance distance less than the depth threshold or the vehicle has moved a distance greater than a minimum parallel parking space length, determining a parallel parking space length based on a distance traveled by the vehicle between detecting the rear boundary and detecting the front boundary of the parallel parking space, and indicating that the parallel parking space is suitable for parallel parking the vehicle based on the parallel parking space length and the parallel parking space depth and wherein the method include indicating by the controller that parallel parking should be aborted.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a top view diagram of a travel path of a vehicle in accordance with one embodiment;
Fig. 2 is a top view diagram of a vehicle equipped with a vehicle parallel parking system detecting a parallel parking space in accordance with one embodiment;
Fig. 3 is a top view diagram of two paths of travel of a vehicle in accordance with one embodiment;
Fig. 4 is a top view diagram of a vehicle parallel parking in accordance with one embodiment;
Fig. 5 is a cut-away section of a vehicle equipped with a vehicle parallel parking system in accordance with one embodiment;
Fig. 6 is a flowchart of a method for detecting a parallel parking space in accordance with one embodiment; and
Fig. 7 is a flow chart of a method for parallel parking a vehicle in accordance with one embodiment.

### DESCRIPTION OF THE PREFERRED EMBODIMENT

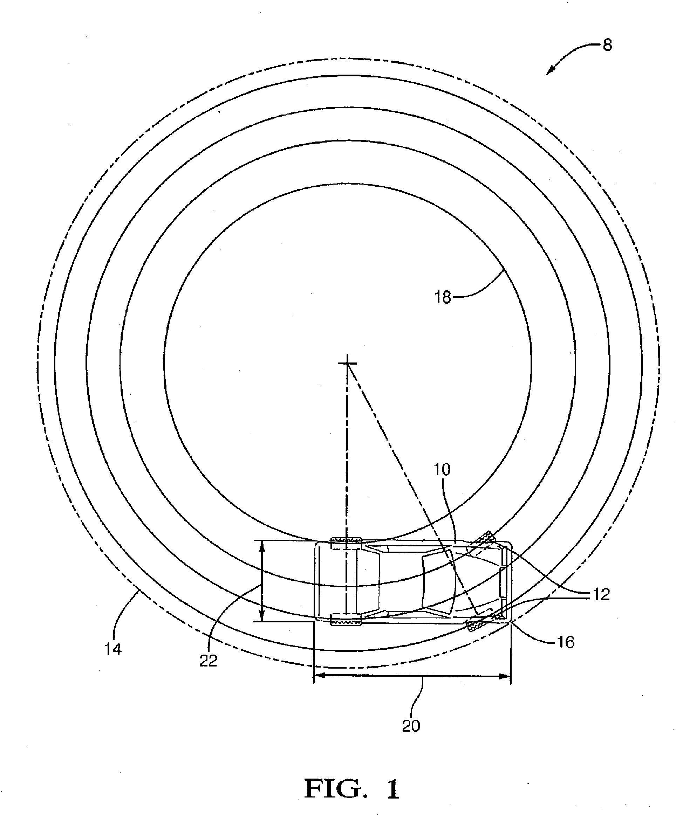

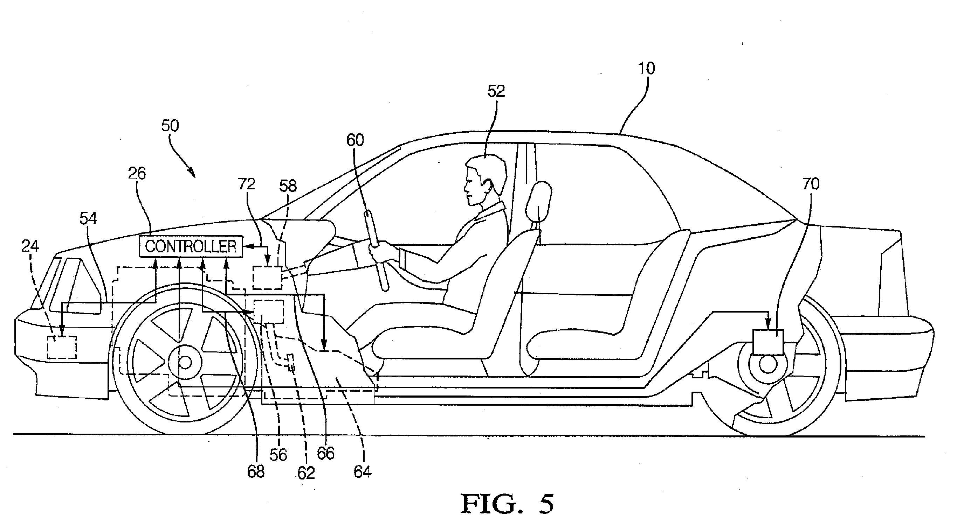

Fig. 1 illustrates a travel path 8 for a vehicle 10 when the vehicle is moved and a steering angle of the steering wheels 12 is held constant at the steering angle illustrated. The four innermost circles illustrate a path for the steering wheels 12 and the non-steering wheels. In this non-limiting example illustrated, two of the four vehicle wheels have variable steering angles, and the other two have fixed steering angles and so are characterized as non-steering wheels. The description below is generally directed to the steering wheels being at the front of the vehicle, but it will be appreciated that the teachings herein could be applied to vehicles with rear steering. Alternatively, the vehicle 10 could be equipped with four-wheel steering and so all four wheels would have variable steering angles. The outer circle illustrates an arc radius 14 of a path traveled by a front corner 16 of the vehicle. Accordingly, any object located within the travel path 8, e.g. - inside the arc radius 14 and outside of the innermost circle 18, may come into contact with the vehicle 10 if the vehicle moves in the travel path 8 illustrated. As described in more detail below, the vehicle 10 may be equipped with a vehicle parallel parking system 50 (Fig. 5) for assisting a vehicle operator 52 with the task of parallel parking the vehicle 10. Fig. 1 may be useful for determining parallel parking space requirements so that it can be determined if a parallel parking space is large enough to accommodate the vehicle 10. The parallel parking space requirements may be based on a vehicle length 20, a vehicle width 22, a minimum turning radius corresponding to the innermost circle 18 when the steering wheels 12 are at a maximum steering angle relative to a straight ahead travel steering angle, and a minimum arc radius 14 of a front corner 16 of the vehicle corresponding to the arc radius traced by the front corner 16 when the steering wheels 12 are at a maximum steering angle relative to a straight ahead travel steering angle.

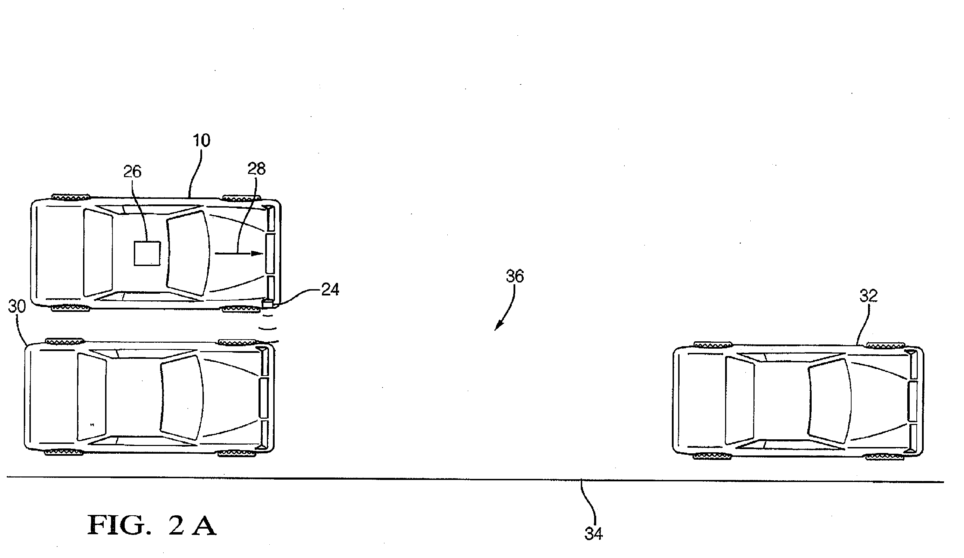

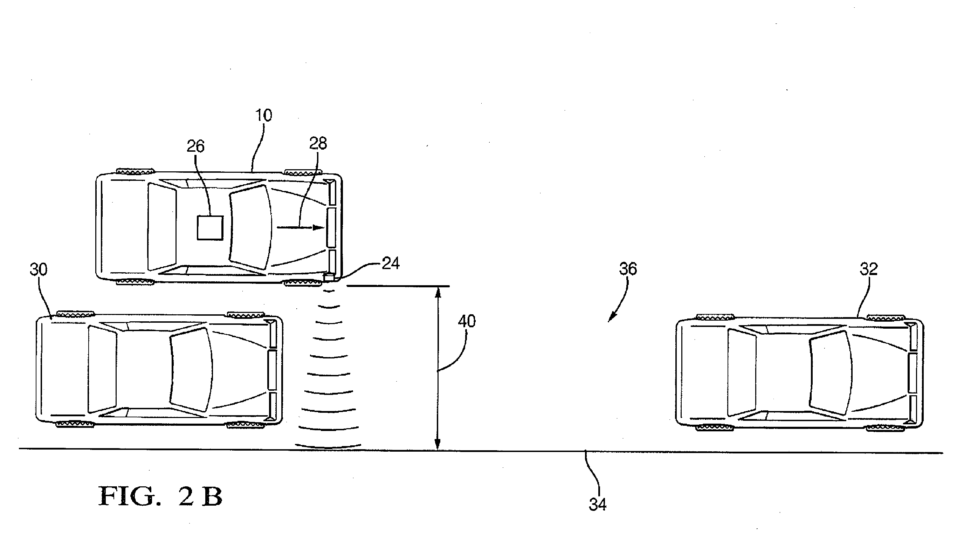

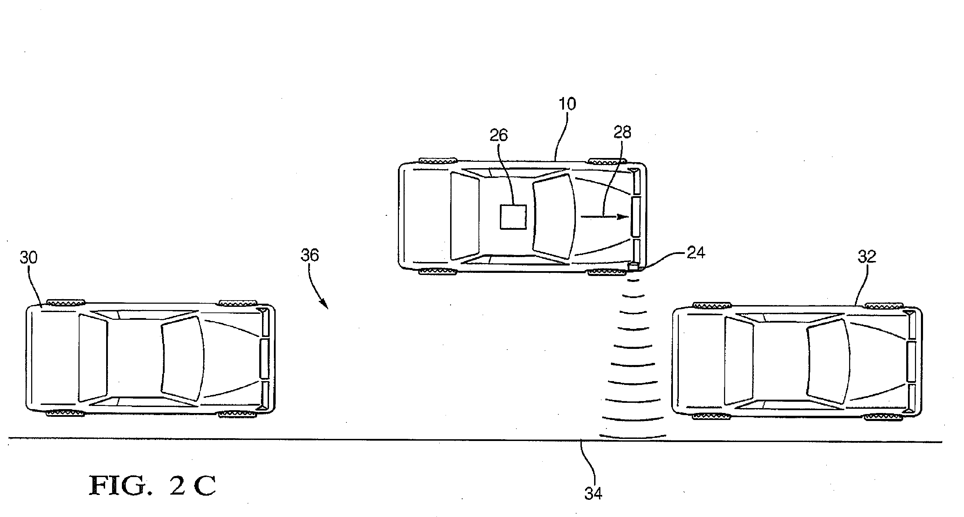

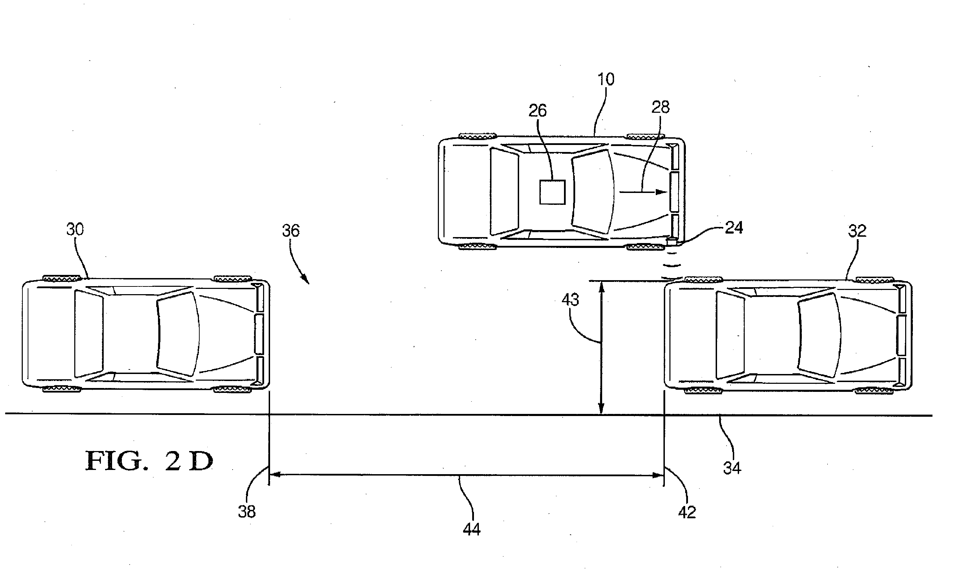

Fig. 2 illustrates a vehicle 10 equipped with a single proximity sensor 24. As used herein, a proximity sensor is a device suitable to measure a distance or range to an object, for example the distance from the proximity sensor 24 to a first other vehicle 30 or a second other vehicle 32 located alongside the vehicle 10, or a distance to a curb 34 alongside the vehicle 10. Suitable devices for the single proximity sensor 24 include, but are not limited to, radar based range sensing devices, ultrasonic based range sensing devices, and laser based range sensing devices. Furthermore, cameras and other such optical imaging devices that create a two dimensional map of a scene are not within the meaning of a proximity sensor as used herein. Such optical imaging devices are specifically excluded from the list of devices suitable to use as the single proximity sensor 24 as such devices require complicated signal processing to determine a distance to an object, and so undesirably increase the cost and complexity of the vehicle 10.

In general, the single proximity sensor 24 is configured to output a clearance signal 54 (Fig. 5) indicative of a clearance distance beside the vehicle 10. The vehicle 10 is equipped with only the single proximity sensor 24 because, as will become apparent in the description below, the method for assisting a vehicle operator to parallel park a vehicle, and the vehicle parallel parking system for assisting a vehicle operator to parallel park a vehicle, only requires a single proximity sensor to operate. The vehicle 10 may also be equipped with a controller 26 configured to receive the clearance signal 54 from the single proximity sensor 24. The controller 26 may also be configured to store the parallel parking space requirements described above, and receive and send signals to other vehicle systems such as a braking system 56 and a steering system 58 (Fig. 5) as will be described in more detail below. Signals to and from the controller 26 may be sent through a vehicle wiring harness as is well known, or may be communicated wirelessly.

The method of parallel parking the vehicle 10 may be generally divided into two distinct processes for reasons of simplifying an explanation of the method. Those distinct processes may be generally defined as a) determining that a parallel parking space is suitable, i.e. - large enough for the vehicle 10, and b) parallel parking the vehicle 10. It should be appreciated that the two processes are generally practiced together. However, it will also be appreciated that determining if a parallel parking space is suitable may be repeated multiple times on multiple parallel parking spaces found to be unsuitable until a suitable parallel parking space is actually found, and then executing the process of parallel parking the vehicle 10.

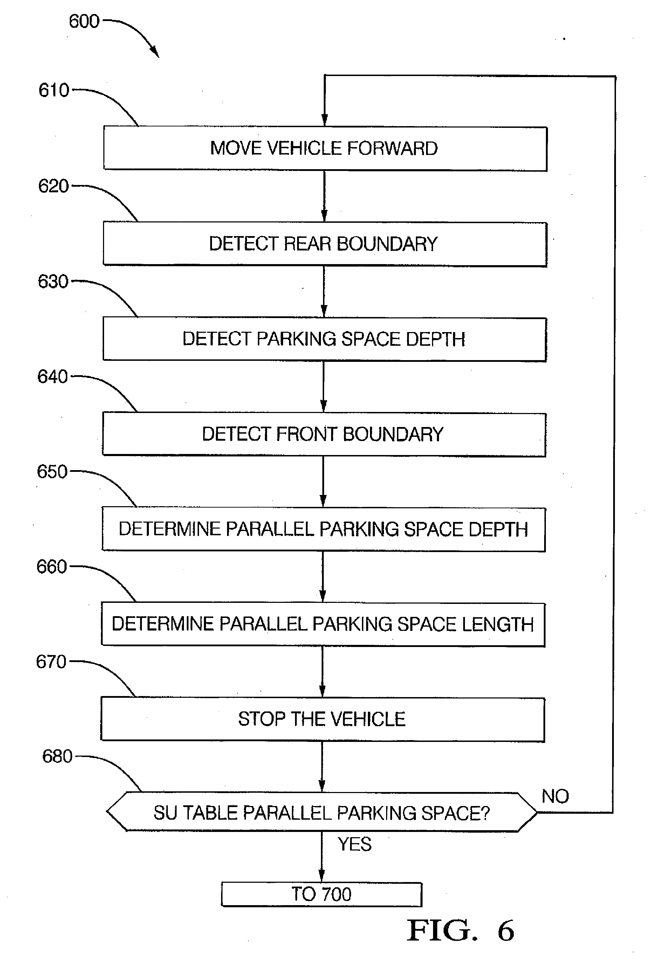

Figs. 2A - 2D illustrate a progression of the vehicle 10 moving in the direction indicated by arrow 28 to detect a parallel parking space 36 suitable for parallel parking the vehicle 10 based on the clearance signal 54. Fig. 6 illustrates a method 600 that describes steps that may be taken by the vehicle parallel parking system 50 that generally correspond to Figs. 2A - 2D. Step 610, MOVE VEHICLE FORWARD, may include moving the vehicle 10 in a direction substantially parallel to the parallel parking space 36 while the controller 26 performs the steps described below. As used herein, substantially parallel to the parallel parking space 36 means that a first distance between the vehicle 10 and the first other vehicle 30 illustrated in Fig. 2A is about equal to a second distance between the vehicle 10 and the second other vehicle 32 illustrated in Fig. 2D, for example the first distance and the second distance differing by less than 0.5 meters. If the first distance and the second distance differ by more than 0.5 meters, then it may indicate that the parking space is not parallel to the path traveled when the vehicle 10 moved from the location illustrated in Fig. 2A to the location illustrated in Fig. 2D. A similar determination of the path traveled by the vehicle 10 may be based on a steady change in the distance to the curb 34 when the vehicle is moving forward.

When the single proximity sensor 24 is mounted on the front corner 16 of the vehicle 10, it is preferable that detecting the parallel parking space 36 be initiated when the vehicle is at or behind the location beside the first other vehicle 30 illustrated in Fig. 2A. By starting at this location, when a suitable parallel parking space is detected, the vehicle 10 will then be near the location beside the second other vehicle 32 from where parallel parking can be initiated. Initiating the process of detecting the parallel parking space 36 may include the vehicle operator 52 pressing a button or issuing a voice command to activate the vehicle parallel parking system 50.

Step 620, DETECT REAR BOUNDARY, may include the controller 26 detecting a rear boundary 38 of the parallel parking space 36 when the clearance signal 54 indicates a clearance distance 40 greater than a predetermined depth threshold, for example greater than 2.5 meters. It will be appreciated that the depth threshold may be adjusted based on the vehicle width, and/or a typical vehicle width for the region or country in which the vehicle parallel parking system 50 is being used. The clearance distance 40 may be a distance from the single proximity sensor 24 to the curb 34 as illustrated, or in the case where no curb or other object is present, the clearance distance 40 recorded by the controller 26 may be limited to some value relative to the distance between the vehicle 10 and the first other vehicle 30.

Step 630, DETECT PARKING SPACE DEPTH, may include the controller 26 recording a number of clearance signal 54 values as the vehicle moves forward so that at a later time a minimum parking space depth value can be determined. By way of example and not limitation, if no curb 34 is present and a tree or fire hydrant is present alongside the parallel parking space 36 (not shown), then these objects may determine the minimum parking space depth value.

Step 640, DETECT FRONT BOUNDARY, may include the controller 26 receiving a clearance signal 54 indicating that the clearance distance is less than the depth threshold. As illustrated in Fig. 2D, a front boundary 42 may be indicated by an abrupt decrease in the clearance distance corresponding to the back end of the second other vehicle 32. Alternatively, the change in clearance distance may be gradual, for example caused by an angled section of the curb 34, or the second other vehicle 32 being parked at an angle. Also, if the second other vehicle is not present and the curb 34 continues straight as illustrated, the vehicle parallel parking system 50 may be configured to designate a location as the front boundary 42 after the vehicle 10 has moved a distance greater than a minimum parallel parking space length.

Step 650, DETERMINE PARALLEL PARKING SPACE DEPTH, may include determining a parallel parking space depth 43 based on a minimum clearance distance detected in step 630 above while the clearance distance 40 is greater than the depth threshold. Alternatively, if no curb 34 or other objects are detected in step 630, the vehicle parallel parking system 50 may be configured to set the parallel parking space depth 43 to a predetermined value based on the vehicle width 22 (Fig. 1).

Step 660, DETERMINE PARALLEL PARKING SPACE LENGTH, may include determining a parallel parking space length 44 based on a distance traveled by the vehicle 10 between detecting the rear boundary 38 and the front boundary 42 of the parallel parking space 36.

Step 670, STOP THE VEHICLE, may be performed by the vehicle operator 52 in response to a signal from the controller 26, or may be performed by the controller 26 if the vehicle parallel parking system 50 is equipped for autonomous parallel parking.

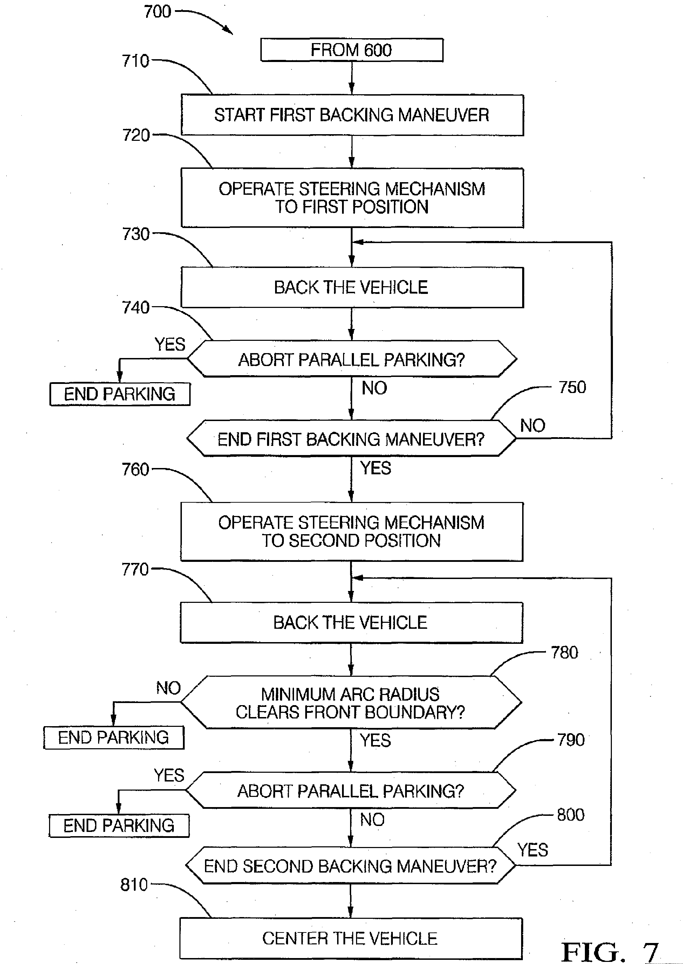

Step 680, SUITABLE PARALLEL PARKING SPACE?, may include the controller processing data received from the clearance signal 54 and a wheel rotation sensor 70, and determining if the parallel parking space 36 is large enough for parallel parking the vehicle 10. If the parallel parking space is not suitable, for example not large enough to accommodate the vehicle 10, then the method 600 may start again to search for a parallel parking space 36 that is suitable by moving the vehicle 10 forward past the second other vehicle 32 in search of another parallel parking space. If the parallel parking space 36 is suitable, then step 680 may include activating an audible indication such as a tone or voice announcement, or may include illuminating an indicator to indicate that the parallel parking space 36 is large enough for parallel parking the vehicle 10. The suitability is generally based on the parallel parking space length 44 and the parallel parking space depth 43. Then vehicle operator 52 or the controller 26, depending on the configuration of the vehicle parallel parking system 50, may proceed with the process of parallel parking the vehicle 10 by proceeding to method 700 (Fig. 7) to parallel park the vehicle.

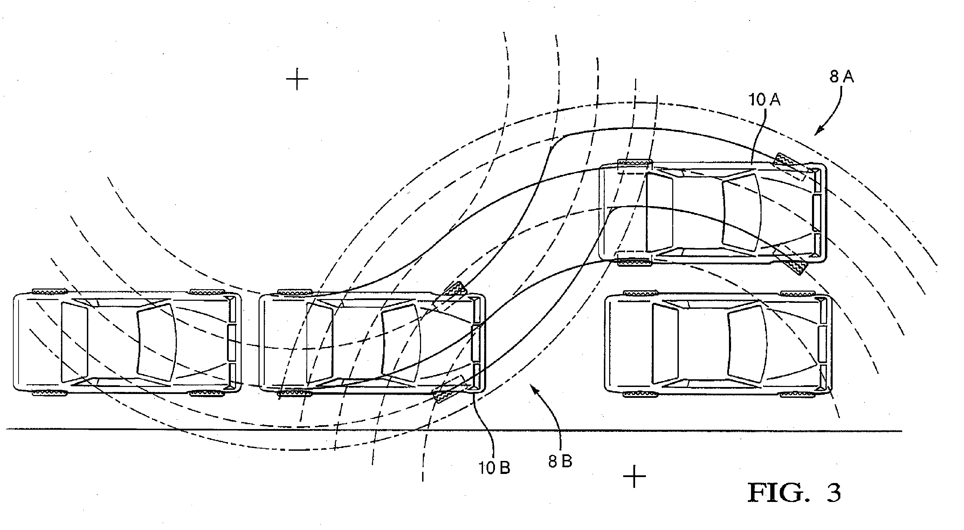

Fig. 3 illustrates a first travel path 8A for a vehicle 10A when the vehicle 10A is moved and the steering angle of the steering wheels is held constant at the steering angle illustrated for vehicle 10A. Fig. 3 also illustrates a second travel path 8B for a vehicle 10B when the vehicle 10B is moved and the steering angle of the steering wheels is held constant at the steering angle illustrated for vehicle 10B. By overlapping the first travel path 8A and the second travel path 8B, the location where the steering angle should be changed to parallel park the vehicle 10 should be evident.

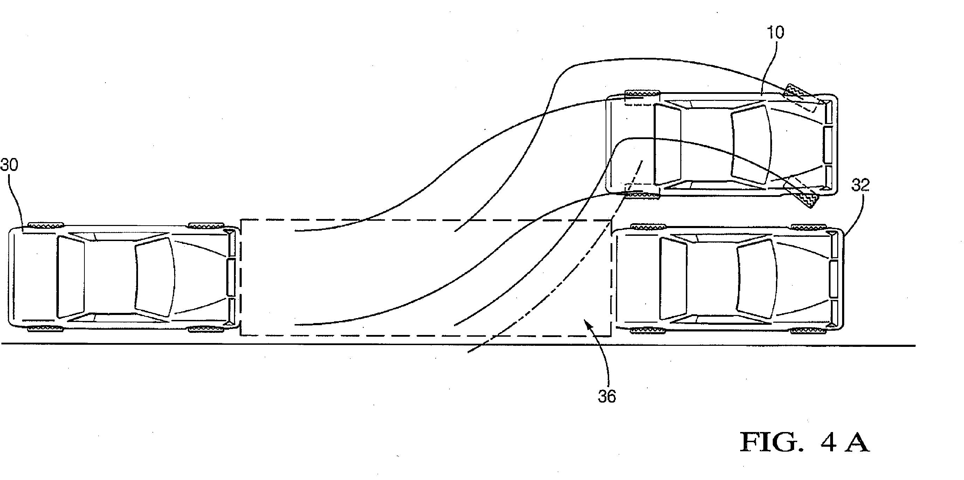

Fig. 7 illustrates a method 700 that assumes that the vehicle 10 is starting near the location suggested in Fig. 4A. Fig. 4A - 4D illustrate the progressive motion of the vehicle 10 during parallel parking into the parallel parking space 36. While not specifically illustrated, it will be appreciated that the progressive motion of the vehicle 10 may also include moving the vehicle 10 forward within the parallel parking space 36 so as to center the vehicle 10 within the parallel parking space 36. Centering the vehicle 10 may be performed by the operator or by the vehicle 10 if so equipped.

Step 710, START FIRST BACKING MANEUVER, may occur following step 680 (Fig. 6) as described above, and may include notifying the vehicle operator 52 that the vehicle 10 is about to start parallel parking if the vehicle parallel parking system 50 is configured for autonomous parallel parking of the vehicle 10, and so may include instructing the vehicle operator 52 to release the brake pedal 62 and/or shift a transmission 64 (Fig. 5) into a specific gear.

Step 720, OPERATE STEERING MECHANISM TO FIRST POSITION, may include instructing the vehicle operator 52 to rotate the steering wheel 60 (Fig. 5) in a direction until the steering system 58 indicates that the steering system 58 has been operated to a first position, such as illustrated in Fig. 4A. If the vehicle parallel parking system 50 is equipped for autonomous operation, the vehicle operator 52 may be instructed to release control of the steering wheel, for example by instructing the vehicle operator 52 to remove the operator's hands from the steering wheel 60 so the controller 26 can operate the steering system 58 to the first position.

Step 730, BACK THE VEHICLE, may include the vehicle operator 52 or the controller 26 operating the braking system 56 to control the speed of the vehicle 10 while backing.

Step 740, ABORT PARALLEL PARKING?, may include the controller 26 determining that the vehicle operator 52 did not hold the steering system 58 in the first position, and so it will not be possible to properly parallel park the vehicle 10. This determination is indicated by the YES response indicating that the operator should not continue to try and parallel park the vehicle, as illustrated by END PARKING. If the parallel parking maneuver is aborted, the vehicle operator may return the vehicle to a location near that indicated in Fig. 4A and attempt parallel parking the vehicle 10 again. It will be appreciated that step 740 may be repeated throughout the method 700 and is illustrated here as a non-limiting example.

Step 750, END FIRST BACKING MANEUVER?, is generally based on determining when the vehicle 10 has backed far enough with the steering system in the first position. The distance that the vehicle 10 has backed may be indicated by the wheel rotation sensor 70 (Fig. 5) and communicated to the controller 26. If NO, the vehicle continues to back-up and the vehicle 10 is monitored to see if parking should be aborted. If YES, the vehicle 10 may be stopped in preparation for step 760.

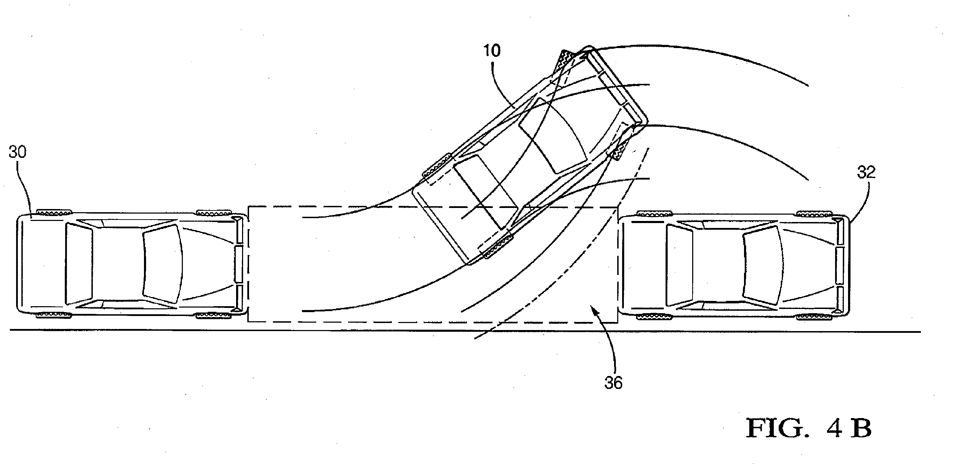

After the vehicle 10 backs to a location similar to that shown in Fig. 4B, an embodiment of the method 700 may include a step of indicating when to start the second backing maneuver, followed a step of operating a steering mechanism such as a steering wheel 60 or a steering system 50 to a second position, and then actually backing the vehicle 10 as describe below. Depending on the configuration of the vehicle parallel parking system 50, the steps of operating the steering mechanism to a second position and then backing the vehicle may be performed by the vehicle operator 52, or the controller 26.

Step 760, OPERATE STEERING MECHANISM TO SECOND POSITION, may include the vehicle operator 52 or the controller 26 operating the steering system 58 so the steering wheels are at a second position corresponding to that illustrated in Fig. 4B. Operating the steering mechanism may also include adjusting vehicle speed based on the rate at which the steering is being adjusted. For example, stop the vehicle 10 if the steering mechanism is not operating or move the vehicle 10 slowly if steering is operating slowly. Method 700 may be continued by executing step 770, BACK THE VEHICLE, to continue to move the vehicle into the parallel parking space 36.

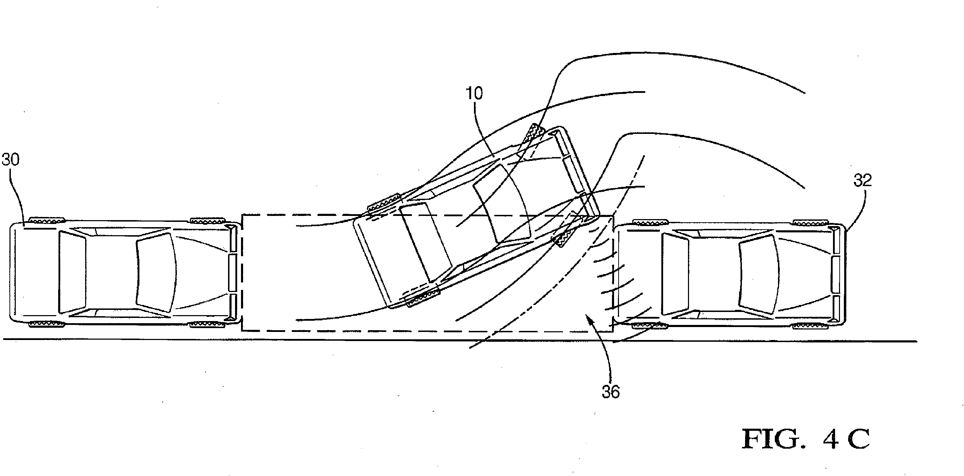

Step 780, MINIMUM ARC RADIUS CLEARS FRONT BOUNDARY?, may include the controller 26 monitoring the clearance signal to determine if the front corner 16 of the vehicle 10 will clear the second other vehicle 32, as illustrated in Fig. 4C. If NO, parallel parking may be stopped, and may include moving the vehicle 10 forward to a location similar to that illustrated in Fig. 4A so parallel parking of the vehicle 10 may be attempted again. If YES, parallel parking may continue and so the vehicle 10 continues to back. In one embodiment, the controller 26 may determine that the minimum arc radius will clear the front boundary of the parallel parking space, and that determination may include the controller 26 determining that the clearance signal 54 indicates a clearance distance greater than a clearance threshold, for example a clearance distance greater than 0.2 meters.

Step 790, ABORT PARALLEL PARKING?, may be similar to step 740 described above and may stop or end the parallel parking process if, for example, it is determined that the vehicle operator 52 did not hold the steering mechanism in the second position. If YES, then END PARKING stops the parallel parking process. If NO, then the parallel parking process may continue.

Step 800, END SECOND BACKING MANEUVER?, may include the controller 26 determining that the vehicle has backed far enough while the steering system 58 is in the second position. If NO, then the vehicle 10 continues to back. If YES, then the second backing maneuver is completed.

Step 810, CENTER THE VEHICLE, is an optional step that may be performed so a first separation between the vehicle 10 and the first other vehicle 30 and a second separation between the vehicle 10 and the second other vehicle 32 may be about the same. Depending on the configuration of the vehicle parallel parking system 50, centering the vehicle may be performed by the vehicle operator 52 or the controller 26. By centering the vehicle 10 in the parallel parking space 36, it may make it more convenient for the first other vehicle 30 and/or the second other vehicle 32 to exit their respective parallel parking spaces without contacting the vehicle 10.

Fig. 5 illustrates an embodiment of the vehicle parallel parking system 50 for assisting a vehicle operator 52 to parallel park a vehicle 10. In one embodiment, the vehicle parallel parking system 50 may include a single proximity sensor 24 configured to output a clearance signal 54 indicative of a clearance distance beside the vehicle 10. The vehicle parallel parking system 50 may include a controller 26 configured to store parallel parking space requirements based on a vehicle length 20 (Fig. 1), a vehicle width 22, an innermost circle 18 or a minimum turning radius 18, and a minimum arc radius of a travel path 8 of a front corner 16 of the vehicle 10. The controller 26 may also be configured to receive the clearance signal 54 from the single proximity sensor 24, detect a parallel parking space 36 suitable for parallel parking the vehicle 10 based on the clearance signal 54.

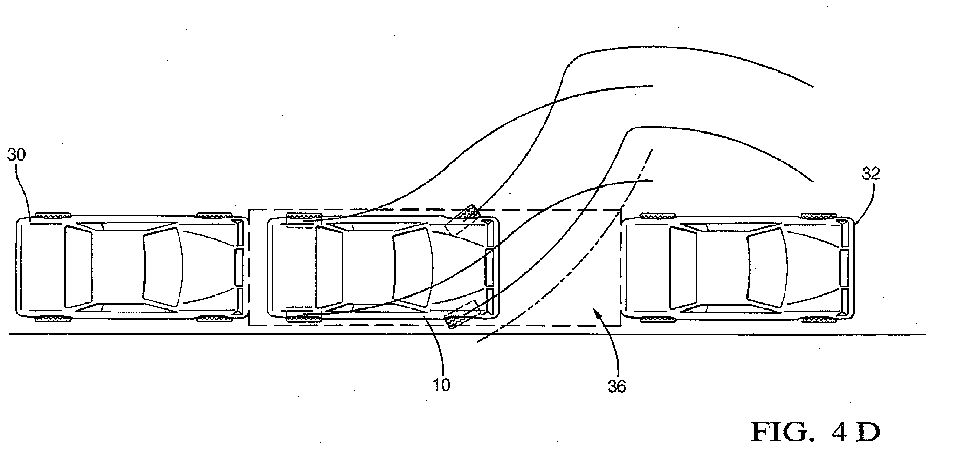

Continuing to refer to Fig. 5, the controller 26 may also be configured to indicate when to start a first backing maneuver based on a suitable parallel parking space 36 being detected. An example of the first backing maneuver is illustrated as beginning with the vehicle 10 in a position illustrated in Fig. 4A and backing to a position illustrated in Fig. 4B. The controller 26 may also be configured to indicate when to stop or finish the first backing maneuver which may be followed or temporally coincident with indicating to start a second backing maneuver. An example of a second backing maneuver is illustrated as beginning with the vehicle in a position illustrated in Fig. 4B, backing through a position illustrated in Fig. 4C, and backing to a position illustrated in Fig 4D. The controller 26 may also be configured to indicate when to end the second backing maneuver, for example when the vehicle 10 reaches the position illustrated in Fig. 4D. The indications provided by the controller 26 may include activating an audible tone or voice command to notify the vehicle operator 52. For case where the vehicle parallel parking system 50 is configured to autonomously parallel park the vehicle 10, the indications provided by the controller may be signals to the steering system 58 and or the braking system 56 to control movement of the vehicle 10

In one embodiment of the vehicle parallel parking system 50, the single proximity sensor 24 may is preferably mounted on a front corner 16 of the vehicle 10, as this location is particularly convenient for typical situations where the vehicle 10 is traveling forward while searching for a parallel parking space 36 that is suitable.

An embodiment of the vehicle parallel parking system 50 may also include a transmission 64 configured to receive a gear selection signal 66 from the controller 26 for controlling vehicle direction, and a brake system 56 configured to receive a brake signal 68 from the controller 26 for stopping the vehicle. The vehicle parallel parking system 50 may also include a distance traveled sensing means for measuring a distance traveled by the vehicle 10. A non-limiting example of distance traveled sensing means is a wheel rotation sensor 70, as illustrated in Fig. 5. Alternatively, the distance traveled sensing means may be a GPS system or a system that determines vehicle motion based on inertial guidance. The vehicle parallel parking system 50 may also include a steering angle sensor within the steering system 58 configured to output a steering angle signal 72 indicative of a steering angle of the steering wheels 12 of the vehicle 10.

While not specifically illustrated, the controller 26 may a memory device to store parallel parking space requirements and an input configured to receive the clearance signal 54 from the single proximity sensor 24. The controller may also include a processor configured to detect a parallel parking space 36 suitable for parallel parking the vehicle 10, indicate when to start a first backing maneuver, indicate when to stop or end the first backing maneuver followed by or coincident with indicating when to start a second backing maneuver, and indicate when to end the second backing maneuver.

Accordingly, a vehicle parallel parking system 50, a controller 26 for the vehicle parallel parking system 50, and a method 600,700 for assisting a vehicle operator to parallel park a vehicle 10 is provided. The system and method relies on only a single proximity sensor 24 to detect a suitable parallel parking space 36 and parallel park the vehicle 10. The single proximity sensor 24 only need indicate distance or range, and as such cameras and other such devices that add undesirable complexity and cost to the vehicle are avoided. Detecting a suitable parking space 36 and parallel parking the vehicle 10 may have the vehicle operator 52 operate the vehicle 10 relying on the vehicle parallel parking system 50 provide indications of when to change steering wheel angle and back the vehicle 10, or may be an autonomous system that controls the vehicle 10 without any intervention on the part of the vehicle operator 52.

## Claims

1. A method (600) for assisting a vehicle operator (52) to parallel park a vehicle (10), said method (600) comprising the steps of:
determining parallel parking space (36) requirements based on a travel path (8, 8A, 8B) defined by a vehicle length (20), a vehicle width (22), a minimum turning radius (18), and a minimum arc radius (14) of a front corner (16) of the vehicle (10);
providing a single proximity sensor (24) configured to output a clearance signal (54) indicative of a clearance distance (40) beside the vehicle (10); and
providing a controller (26) configured to perform the steps of storing the parallel parking space (36) requirements;
receiving the clearance signal (54) from the single proximity sensor (24);
detecting a parallel parking space (36) suitable for parallel parking the
vehicle (10) based on the clearance signal (54);
indicating when to start a first backing maneuver;
indicating when to start a second backing maneuver; and
indicating when to end the second backing maneuver;
**characterized in that** the step (610) of detecting a parallel parking space (36)
includes
moving the vehicle (10) in a direction substantially parallel to the parallel parking space (36) while the controller (26) performs the steps of
detecting a rear boundary (38) of the parallel parking space (36) when the clearance signal (54) indicates a clearance distance (40) greater than a depth threshold,
determining a parallel parking space depth (43) based on a minimum clearance distance (40) detected while the clearance distance (40) is greater than the depth threshold,
detecting a front boundary (42) of the parallel parking space (36) when either the clearance signal (54) indicates a clearance distance (40) less than the depth threshold or the vehicle (10) has moved a distance greater than a minimum parallel parking space length (44),
determining a parallel parking space length (44) based on a distance traveled by the vehicle (10) between detecting the rear boundary (38) and detecting the front boundary (42) of the parallel parking space (36), and
indicating that the parallel parking space (36) is suitable for parallel parking the vehicle (10) based on the parallel parking space length (44) and the parallel parking space depth (43) and
wherein the method (600) includes indicating by the controller (26) that parallel parking should be aborted.

2. The method (600) in accordance with claim 1, wherein the step (610) of detecting a parallel parking space (36) includes the controller (26) stopping the vehicle (10).

3. The method (600) in accordance with claim 1, wherein the step (610) of indicating when to start the first backing maneuver is followed by operating a steering mechanism to a first position and then backing the vehicle (10).

4. The method (600) in accordance with claim 3, wherein the step (610) of operating the steering wheel (60) to the first position and then backing the vehicle (10) is performed by the vehicle operator (52) or the controller (26)

5. The method (600) in accordance with claim 1, wherein the step (610) of indicating when to start the second backing maneuver includes the controller (26) determining that the minimum arc radius (14) will clear the front boundary (42) of the parallel parking space (36).

6. The method (600) in accordance with claim 5, wherein the step (610) of determining that the minimum arc radius (14) will clear the front boundary (42) of the parallel parking space (36) includes the controller (26) determining that the clearance signal (54) indicates a clearance distance (40) greater than a clearance threshold.

7. The method (600) in accordance with claim 1, wherein the step (610) of indicating when to start the second backing maneuver is followed by operating a steering mechanism to a second position and then backing the vehicle (10).

8. The method (600) in accordance with claim 7, wherein the steps of operating a steering mechanism to a second position and then backing the vehicle (10) are performed by the vehicle operator (52) or the controller (26)

9. The method (600) in accordance with claim 1, wherein the step (610) of indicating when to end the second backing maneuver is followed by centering the vehicle (10) in the parallel parking space (36).

10. The method (600) in accordance with claim 9, wherein the step (610) of centering the vehicle (10) in the parallel parking space (36) is performed by the vehicle operator (52) or the controller (26).

11. A vehicle parallel parking system (50) for assisting a vehicle operator (52) to parallel park a vehicle (10), said system comprising:
a single proximity sensor (24) configured to output a clearance signal (54) indicative of a clearance distance (40) beside the vehicle (10); and a controller (26) configured to
store parallel parking space (36) requirements based on a vehicle length (20), a vehicle width (22), a minimum turning radius (18), and a minimum arc radius (14) of a front corner (16) of the vehicle (10);
receive the clearance signal (54) from the single proximity sensor (24);
detect a parallel parking space (36) suitable for parallel parking the vehicle (10) based on the clearance signal (54); being configured to:
indicate when to start a first backing maneuver;
indicate when to start a second backing maneuver; and
indicate when to end the second backing maneuver.
where the controller (26) comprises
a memory device to store parallel parking space (36) requirements based on a vehicle length (20), a vehicle width (22), a minimum turning radius (18), and a minimum arc radius (14) of a front corner (16) of the vehicle (10);
an input configured to receive the clearance signal (54) from the single proximity sensor (24) configured to output a clearance signal (54) indicative of a clearance distance (40) beside the vehicle (10); and
a processor configured to detect a parallel parking space (36) suitable for parallel parking the vehicle (10) based on the clearance signal (54), indicate when to start a first backing maneuver, indicate when to start a second backing maneuver, and
indicate when to end the second backing maneuver, **characterized in that** the controller is adapted to detect a parallel parking space (36) by being adapted to:
move the vehicle (10) in a direction substantially parallel to the parallel parking space (36) whilst performing the steps of
detect a rear boundary (38) of the parallel parking space (36) when the clearance signal (54) indicates a clearance distance (40) greater than a depth threshold,
determine a parallel parking space depth (43) based on a minimum clearance distance (40) detected while the clearance distance (40) is greater than the depth threshold,
detect a front boundary (42) of the parallel parking space (36) when either the clearance signal (54) indicates a clearance distance (40) less than the depth threshold or the vehicle (10) has moved a distance greater than a minimum parallel parking space length (44),
determine a parallel parking space length (44) based on a distance traveled by the vehicle (10) between detecting the rear boundary (38) and detecting the front boundary (42) of the parallel parking space (36), and
indicate that the parallel parking space (36) is suitable for parallel parking the vehicle (10) based on the parallel parking space length (44) and the parallel parking space depth (43) and
the controller configured to indicate that parallel parking should be aborted.

12. A system in accordance with claim 11 wherein the single proximity sensor (24) is mounted on a front corner (16) of the vehicle (10).

13. A system in accordance with claim 11, wherein the system further comprises a transmission (64) configured to receive a gear selection signal (66) from the controller (26) for controlling vehicle (10) direction, a brake system (56) configured to receive a brake signal (68) from the controller (26) for stopping the vehicle (10), a distance traveled sensing means for measuring a distance traveled by the vehicle (10), and a steering angle sensor configured to output a steering angle signal (72) indicative of a steering angle of the vehicle (10).

14. A system in accordance with claim 11, wherein the system further comprises an indication device configured to indicate to the vehicle operator (52) when a parallel parking space (36) is detected, when to start a first backing maneuver, when to start a second backing maneuver, and when to end the second backing maneuver.

## Patentansprüche

1. Verfahren (600) zum Assistieren eines Fahrzeugfahrers (52) beim Längsparken eines Fahrzeugs (10), wobei das genannte Verfahren (600) die folgenden Schritte umfasst:
Ermitteln von Anforderungen für eine Längsparklücke (36) auf Basis eines Fahrwegs (8, 8A, 8B), der von einer Fahrzeuglänge (20), einer Fahrzeugbreite (22), einem Mindestwendekreis (18) und einem Mindestbogenradius (14) einer vorderen Ecke (16) des Fahrzeugs (10) definiert wird,
Bereitstellen eines einzelnen Näherungssensors (24), der zum Ausgeben eines Freiraumsignals (54) konfiguriert ist, das einen Freiraumabstand (40) neben dem Fahrzeug (10) erkennen lässt, und
Bereitstellen eines Steuergeräts (26), das zum Durchführen der folgenden Schritte konfiguriert ist:
Speichern der Anforderungen für eine Längsparklücke (36),
Empfangen des Freiraumsignals (54) von dem einzelnen Näherungssensor (24),
Erkennen einer zum Längsparken des Fahrzeugs (10) geeigneten Längsparklücke (36) auf Basis des Freiraumsignals (54),
Anzeigen, wann ein erstes Rückwärtsrangieren zu starten ist,
Anzeigen, wann ein zweites Rückwärtsrangieren zu starten ist, und
Anzeigen, wann das zweite Rückwärtsrangieren zu beenden ist, **dadurch gekennzeichnet, dass** der Schritt (610) des Erkennens einer Längsparklücke (36) Folgendes beinhaltet:
Bewegen des Fahrzeugs (10) in einer Richtung, die zu der Längsparklücke (36) im Wesentlichen parallel ist, während das Steuergerät (26) die folgenden Schritte durchführt:
Erkennen einer hinteren Grenze (38) der Längsparklücke (36), wenn das Freiraumsignal (54) einen Freiraumabstand (40) erkennen lässt, der größer als eine Tiefenschwelle ist,
Ermitteln einer Längsparklückentiefe (43) auf Basis eines Mindestfreiraumabstands (40), der erkannt wird, während der Freiraumabstand (40) größer als die Tiefenschwelle ist,
Erkennen einer vorderen Grenze (42) der Längsparklücke (36), wenn entweder das Freiraumsignal (54) einen Freiraumabstand (40) anzeigt, der kleiner als die Tiefenschwelle ist, oder das Fahrzeug (10) sich um eine größere Entfernung als eine Längsparklücken-Mindestlänge (44) bewegt hat,
Ermitteln einer Längsparklückenlänge (44) auf Basis einer von dem Fahrzeug (10) zwischen dem Erkennen der hinteren Grenze (38) und dem Erkennen der vorderen Grenze (42) der Längsparklücke (36) zurückgelegten Entfernung, und
Anzeigen, dass die Längsparklücke (36) auf Basis der Längsparklückenlänge (44) und der Längsparklückentiefe (43) zum Längsparken des Fahrzeugs (10) geeignet ist, und
wobei das Verfahren (600) das Anzeigen durch das Steuergerät (26), dass das Längsparken abgebrochen werden sollte, beinhaltet.

2. Verfahren (600) nach Anspruch 1, wobei der Schritt (610) des Erkennens einer Längsparklücke (36) das Anhalten des Fahrzeugs (10) durch das Steuergerät (16) beinhaltet.

3. Verfahren (600) nach Anspruch 1, wobei dem Schritt (610) des Anzeigens, wann das erste Rückwärtsrangieren zu starten ist, das Bedienen eines Lenkmechanismus auf eine erste Position und dann das Zurücksetzen des Fahrzeugs (10) folgt.

4. Verfahren (600) nach Anspruch 3, wobei der Schritt (610) des Bedienens des Lenkrads (60) auf die erste Position und dann des Zurücksetzens des Fahrzeugs (10) von dem Fahrzeugfahrer (52) oder dem Steuergerät (26) durchgeführt wird.

5. Verfahren (600) nach Anspruch 1, wobei der Schritt (610) des Anzeigens, wann das zweite Rückwärtsrangieren zu starten ist, das Ermitteln durch das Steuergerät (26) beinhaltet, dass der Mindestbogenradius (14) die vordere Grenze (42) der Längsparklücke (36) nicht berühren wird.

6. Verfahren (600) nach Anspruch 5, wobei der Schritt (610) des Ermittelns, dass der Mindestbogenradius (14) die vordere Grenze (42) der Längsparklücke (36) nicht berühren wird, das Ermitteln durch das Steuergerät (26) beinhaltet, dass das Freiraumsignal (54) einen Freiraumabstand (40) erkennen lässt, der größer als eine Freiraumschwelle ist.

7. Verfahren (600) nach Anspruch 1, wobei dem Schritt (610) des Anzeigens, wann das zweite Rückwärtsrangieren zu starten ist, das Bedienen eines Lenkmechanismus auf eine zweite Position und dann das Zurücksetzen des Fahrzeugs (10) folgt.

8. Verfahren (600) nach Anspruch 7, wobei die Schritte des Bedienens eines Lenkmechanismus auf eine zweite Position und dann des Zurücksetzens des Fahrzeugs (10) von dem Fahrzeugfahrer (52) oder dem Steuergerät (26) durchgeführt werden.

9. Verfahren (600) nach Anspruch 1, wobei dem Schritt (610) des Anzeigens, wann das zweite Rückwärtsrangieren zu beenden ist, das Zentrieren des Fahrzeugs (10) in der Längsparklücke (36) folgt.

10. Verfahren (600) nach Anspruch 9, wobei der Schritt (610) des Zentrierens des Fahrzeugs (10) in der Längsparklücke (36) von dem Fahrzeugfahrer (52) oder dem Steuergerät (26) durchgeführt wird.

11. Fahrzeug-Längsparksystem (50) zum Assistieren eines Fahrzeugfahrers (52) beim Längsparken eines Fahrzeugs (10), wobei das genannte System Folgendes umfasst:
einen einzelnen Näherungssensor (24), der zum Ausgeben eines Freiraumsignals (54) konfiguriert ist, das einen Freiraumabstand (40) neben dem Fahrzeug (10) erkennen lässt, und
ein Steuergerät (26), das konfiguriert ist zum:
Speichern von Anforderungen für eine Längsparklücke (36) auf Basis einer Fahrzeuglänge (20), einer Fahrzeugbreite (22), eines Mindestwendekreises (18) und eines Mindestbogenradius (14) einer vorderen Ecke (16) des Fahrzeugs (10),
Empfangen des Freiraumsignals (54) von dem einzelnen Näherungssensor (24),
Erkennen einer Längsparklücke (36), die zum Längsparken des Fahrzeugs (10) geeignet ist, auf Basis des Freiraumsignals (54), das konfiguriert ist zum:
Anzeigen, wann ein erstes Rückwärtsrangieren zu starten ist,
Anzeigen, wann ein zweites Rückwärtsrangieren zu starten ist, und
Anzeigen, wann das zweite Rückwärtsrangieren zu beenden ist,
wobei das Steuergerät (26) Folgendes aufweist:
eine Speichereinrichtung zum Speichern von Anforderungen für eine Längsparklücke (36) auf Basis einer Fahrzeuglänge (20), einer Fahrzeugbreite (22), eines Mindestwendekreises (18) und eines Mindestbogenradius (14) einer vorderen Ecke (16) des Fahrzeugs (10),
einen Eingang, der zum Empfangen des Freiraumsignals (54) von dem einzelnen Näherungssensor (24) konfiguriert ist, der zum Ausgeben eines Freiraumsignals (54) konfiguriert ist, das einen Freiraumabstand (40) neben dem Fahrzeug (10) erkennen lässt, und
einen Prozessor, der konfiguriert ist zum Erkennen einer Längsparklücke (36), die zum Längsparken des Fahrzeugs (10) geeignet ist, auf Basis des Freiraumsignals (54), Anzeigen, wann ein erstes Rückwärtsrangieren zu starten ist, Anzeigen, wann ein zweites Rückwärtsrangieren zu starten ist, und
Anzeigen, wann das zweite Rückwärtsrangieren zu beenden ist, **dadurch gekennzeichnet, dass** das Steuergerät zum Erkennen einer Längsparklücke (36) ausgeführt ist, indem er ausgeführt ist zum:
Bewegen des Fahrzeugs (10) in einer Richtung, die zu der Längsparklücke (36) im Wesentlichen parallel ist, während er die folgenden Schritte durchführt:
Erkennen einer hinteren Grenze (38) der Längsparklücke (36), wenn das Freiraumsignal (54) einen Freiraumabstand (40) anzeigt, der größer als eine Tiefenschwelle ist,
Ermitteln einer Längsparklückentiefe (43) auf Basis eines Mindestfreiraumabstands (40), der erkannt wird, während der Freiraumabstand (40) größer als die Tiefenschwelle ist,
Erkennen einer vorderen Grenze (42) der Längsparklücke (36), wenn entweder das Freiraumsignal (54) einen Freiraumabstand (40) erkennen lässt, der kleiner als die Tiefenschwelle ist, oder das Fahrzeug (10) sich um eine größere Entfernung als eine Längsparklücken-Mindestlänge (44) bewegt hat,
Ermitteln einer Längsparklückenlänge (44) auf Basis einer von dem Fahrzeug (10) zwischen dem Erkennen der hinteren Grenze (38) und dem Erkennen der vorderen Grenze (42) der Längsparklücke (36) zurückgelegten Entfernung, und
Anzeigen, dass die Längsparklücke (36) auf Basis der Längsparklückenlänge (44) und der Längsparklückentiefe (43) zum Längsparken des Fahrzeugs (10) geeignet ist, und
wobei das Steuergerät ausgeführt ist, um anzuzeigen, dass das Längsparken abgebrochen werden sollte.

12. System nach Anspruch 11, wobei der einzelne Näherungssensor (24) an einer vorderen Ecke (16) des Fahrzeugs (10) montiert ist.

13. System nach Anspruch 11, wobei das System ferner ein Getriebe (64), das zum Empfangen eines Gangwahlsignals (66) von dem Steuergerät (26) zum Steuern der Richtung des Fahrzeugs (10) konfiguriert ist, ein Bremssystem (56), das zum Empfangen eines Bremssignals (68) von dem Steuergerät (26) zum Anhalten des Fahrzeugs (10) konfiguriert ist, eine Wegstreckenmesseinrichtung zum Messen einer von dem Fahrzeug (10) zurückgelegten Entfernung und einen Lenkwinkelsensor, der zum Ausgeben eines Lenkwinkelsignals (72) konfiguriert ist, das einen Lenkwinkel des Fahrzeugs (10) erkennen lässt, aufweist.

14. System nach Anspruch 11, wobei das System ferner eine Anzeigevorrichtung aufweist, die konfiguriert ist, um dem Fahrzeugfahrer (52) anzuzeigen, wenn eine Längsparklücke (36) erkannt worden ist, wann ein erstes Rückrangieren zu starten ist, wann ein zweites Rückrangieren zu starten ist und wann das zweite Rückrangieren zu beenden ist.

## Revendications

1. Procédé (600) pour assister un opérateur de véhicule (52) au stationnement parallèle d'un véhicule (10), ledit procédé (600) comprenant les étapes consistant à :
détenniner des exigences pour un espace de stationnement parallèle (36) sur la base d'un trajet de déplacement (8, 8A, 8B) défini par une longueur de véhicule (20), une largeur de véhicule (22), un rayon de virage minimum (18), et un rayon d'arc minimum (14) d'un coin avant (16) du véhicule (10) ;
prévoir un unique capteur de proximité (24) configuré pour délivrer un signal de dégagement (54) indicatif d'une distance de dégagement (40) à côté du véhicule (10) ; et
prévoir un contrôleur (26) configuré pour exécuter les étapes consistant à
stocker les exigences pour l'espace de stationnement parallèle (36) ;
recevoir le signal de dégagement (54) depuis l'unique capteur de proximité (24) ;
détecter un espace de stationnement parallèle (36) convenable pour le stationnement parallèle du véhicule (10) sur la base du signal de dégagement (54) ;
indiquer le moment pour débuter une première manoeuvre de recul ;
indiquer le moment pour débuter une seconde manoeuvre de recul ;
indiquer le moment pour terminer la seconde manoeuvre de recul ;
**caractérisé en ce que** l'étape (610) consistant à détecter un espace de stationnement parallèle (36) inclut l'étape consistant à :
déplacer le véhicule (10) dans une direction sensiblement parallèle à l'espace de stationnement parallèle (36) alors que le contrôleur (26) exécute les opérations consistant à :
détecter une frontière arrière (38) de l'espace de stationnement parallèle (36) quand le signal de dégagement (54) indique une distance de dégagement (40) plus grande qu'un seuil de profondeur,
déterminer une profondeur d'espace de stationnement parallèle (43) sur la base d'une distance de dégagement minimum (40) détectée alors que la distance de dégagement (40) est plus grande que le seuil de profondeur,
détecter une frontière avant (42) de l'espace de stationnement parallèle (36) soit lorsque le signal de dégagement (54) indique une distance de dégagement (40) plus petite que le seuil de profondeur soit lorsque le véhicule (10) s'est déplacé d'une distance plus grande qu'une longueur minimum (44) pour l'espace de stationnement parallèle,
déterminer une longueur (44) pour l'espace de stationnement parallèle sur la base d'une distance parcourue par le véhicule (10) entre la détection de la frontière arrière (38) et la détection de la frontière avant (42) de l'espace de stationnement parallèle (36), et
indiquer que l'espace de stationnement parallèle (36) convient pour le stationnement parallèle du véhicule (10) sur la base de la longueur (44) de l'espace de stationnement parallèle et de la profondeur (43) de l'espace de stationnement parallèle, et
dans lequel le procédé (600) inclut l'opération consistant à indiquer par le contrôleur (26) que le stationnement parallèle devrait être avorté.

2. Procédé (600) selon la revendication 1, dans lequel l'étape (610) consistant à détecter un espace de stationnement parallèle (36) inclut que le contrôleur (26) arrête le véhicule (10).

3. Procédé (600) selon la revendication 1, dans lequel l'étape (610) consistant à indiquer le moment pour démarrer la première manoeuvre de recul est suivie par la mise en fonctionnement d'un mécanisme de direction à une première position puis par le recul du véhicule (10).

4. Procédé (600) selon la revendication 3, dans lequel l'étape (610) consistant à faire fonctionner le volant de direction (60) à la première position puis ensuite à reculer le véhicule (10) est effectuée par l'opérateur (52) du véhicule ou par le contrôleur (26).

5. Procédé (600) selon la revendication 1, dans lequel l'étape (610) consistant à indiquer le moment pour débuter la seconde manoeuvre de recul inclut que le contrôleur (26) détermine que le rayon d'arc minimum (14) sera dégagé de la frontière avant (42) de l'espace de stationnement parallèle (36).

6. Procédé (600) selon la revendication 5, dans lequel l'étape (610) consistant à déterminer que le rayon d'arc minimum (14) sera dégagé de la frontière avant (42) de l'espace de stationnement parallèle (36) inclut que le contrôleur (26) détermine que le signal de dégagement (54) indique une distance de dégagement (40) plus grande qu'un seuil de dégagement.

7. Procédé (600) selon la revendication 1, dans lequel l'étape (610) consistant à indiquer le moment pour débuter la seconde manoeuvre de recul est suivie par la mise en fonctionnement d'un mécanisme de direction à une seconde position, puis par un recul du véhicule (10).

8. Procédé (600) selon la revendication 7, dans lequel les étapes consistant à faire fonctionner un mécanisme de direction à une seconde position puis à reculer le véhicule (10) sont effectuées par l'opérateur (52) du véhicule ou par le contrôleur (26).

9. Procédé (600) selon la revendication 1, dans lequel l'étape (610) consistant à indiquer le moment pour terminer la seconde manoeuvre de recul est suivie par un centrage du véhicule (10) dans l'espace de stationnement parallèle (36).

10. Procédé (600) selon la revendication 9, dans lequel l'étape (610) consistant à centrer le véhicule (10) dans l'espace de stationnement parallèle (36) est effectuée par l'opérateur (52) du véhicule ou par le contrôleur (26).

11. Système de stationnement parallèle (50) pour véhicule, pour assister un opérateur de véhicule (52) au stationnement parallèle d'un véhicule (10), ledit système comprenant :
un unique capteur de proximité (24) configuré pour délivrer un signal de dégagement (54) indicatif d'une distance de dégagement (40) à côté du véhicule (10) ; et
un contrôleur (26) configuré pour
stocker des exigences concernant un espace de stationnement parallèle (36) sur la base d'une longueur du véhicule (20), d'une largeur du véhicule (22), d'un rayon de virage minimum (18), et d'un rayon d'arc minimum (14) d'un coin avant (16) du véhicule (10) ;
recevoir le signal de dégagement (54) depuis l'unique capteur de proximité (24) ;
détecter un espace de stationnement parallèle (36) convenable pour le stationnement parallèle du véhicule (10) sur la base du signal de dégagement (54) ;
et configuré pour :
indiquer le moment pour débuter une première manoeuvre de recul ;
indiquer le moment pour débuter une seconde manoeuvre de recul ; et
indiquer le moment pour terminer la seconde manoeuvre de recul ;
dans lequel le contrôleur (26) comprend :
un dispositif à mémoire pour stocker les exigences concernant l'espace de stationnement parallèle (36) sur la base d'une longueur du véhicule (20), d'une largeur du véhicule (22), d'un rayon de virage minimum (18), et d'un rayon d'arc minimum (14) d'un coin avant (16) du véhicule (10);
une entrée configurée pour recevoir le signal de dégagement (54) depuis l'unique capteur de proximité (24) configuré pour délivrer un signal de dégagement (54) indicatif d'une distance de dégagement (40) à côté du véhicule (10) ; et
un processeur configuré pour détecter un espace de stationnement parallèle (36) convenable pour le stationnement parallèle du véhicule (10) sur la base du signal de dégagement (54), pour indiquer le moment pour débuter une première manoeuvre de recul, pour indiquer le moment pour débuter une seconde manoeuvre de recul, et pour indiquer le moment pour déterminer la seconde manoeuvre de recul,
**caractérisé en ce que** le contrôleur est adapté à détecter un espace de stationnement parallèle (36) en étant adapté à :
déplacer le véhicule (10) dans une direction sensiblement parallèle à l'espace de stationnement parallèle (36) tout en effectuant les opérations consistant à :
détecter une frontière arrière (38) de l'espace de stationnement parallèle (36) quand le signal de dégagement (54) indique une distance de dégagement (40) plus grande qu'un seuil de profondeur,
déterminer une profondeur (43) de l'espace de stationnement parallèle sur la base d'une distance de dégagement minimum (40) détectée alors que la distance de dégagement (40) est plus grande que le seuil de profondeur,
détecter une frontière avant (42) de l'espace de stationnement parallèle (36) soit quand le signal de dégagement (54) indique une distance de dégagement (40) plus petite que le seuil de profondeur soit quand le véhicule (10) s'est déplacé sur une distance plus grande qu'une longueur minimum (44) pour l'espace de stationnement parallèle,
déterminer une longueur (44) pour l'espace de stationnement parallèle sur la base d'une distance parcourue par le véhicule (10) entre la détection de la frontière arrière (38) et la détection de la frontière avant (42) de l'espace de stationnement parallèle (36), et
indiquer que l'espace de stationnement parallèle (36) est convenable pour le stationnement parallèle du véhicule (10) sur la base de la longueur (44) et de la profondeur (43) de l'espace de stationnement parallèle, et
le contrôleur est configuré pour indiquer que le stationnement parallèle devrait être avorté.

12. Système selon la revendication 11, dans lequel l'unique capteur de proximité (24) est monté sur un coin avant (16) du véhicule (10).

13. Système selon la revendication 11, dans lequel le système comprend en outre une boîte de vitesses (64) configurée pour recevoir un signal de sélection de rapport de vitesse (66) depuis le contrôleur (26) pour commander une direction du véhicule (10), un système de frein (56) configuré pour recevoir un signal de freinage (68) depuis le contrôleur (26) pour arrêter le véhicule (10), un moyen de détection de distance parcourue pour mesurer une distance parcourue par le véhicule (10), et un capteur d'angle de direction configuré pour délivrer un signal d'angle de direction (72) indicatif d'un angle de direction du véhicule (10).

14. Système selon la revendication 11, dans lequel le système comprend en outre un dispositif d'indication configuré pour indiquer à l'opérateur (52) du véhicule lorsqu'un espace de stationnement parallèle (36) est détecté, le moment pour débuter une première manoeuvre de recul, le moment pour débuter une seconde manoeuvre de recul, et le moment pour terminer la seconde manoeuvre de recul.
